# EUROPÄISCHE PATENTSCHRIFT

(11) **EP 4 255 666 B1**
(45) Veröffentlichungstag und Bekanntmachung des Hinweises auf die Patenterteilung: **19.02.2025**
(21) Anmeldenummer: 21820516.9
(22) Anmeldetag: 25.11.2021
(51) Int. Cl.: B23K 26/38

(54) **LASERSCHNEIDVERFAHREN ZUM AUSSCHNEIDEN EINES WERKSTÜCKTEILS**
LASER CUTTING METHOD FOR CUTTING OUT A WORKPIECE PART
PROCÉDÉ DE DÉCOUPE AU LASER POUR DÉCOUPER UNE PARTIE DE PIÈCE

(30) Priorität: 01.12.2020 DE 102020131869
(43) Veröffentlichungstag der Anmeldung: 11.10.2023
(73) Patentinhaber: TRUMPF Werkzeugmaschinen SE + Co. KG, 71254 Ditzingen (DE)
(72) Erfinder: KAISER, Tobias, 71277 Rutesheim (DE)
(74) Vertreter: Trumpf Patentabteilung
(86) Internationale Anmeldenummer: PCT/EP2021/083039
(87) Internationale Veröffentlichungsnummer: WO 2022/117436

(56) Entgegenhaltungen:
- EP-A1- 0 646 434
- JP-A- 2019 098 364
- US-A1- 2020 156 137

## Beschreibung

### Gebiet der Technik

Die Erfindung betrifft das Gebiet der Laserschneidverfahren. Insbesondere betrifft die Erfindung ein Laserschneidverfahren zum Ausschneiden eines Werkstückteils aus einem metallischen, insbesondere plattenförmigen, Werkstück. Die Gattung wird in der EP 0 646 434 offenbart.

### Stand der Technik

Gattungsgemäße Verfahren zum Schneiden metallischer Werkstücke (z.B. Metallbleche) umfassen das Laserbrennschneiden und das Laserschmelzschneiden. Dabei wird zum Erzeugen eines Schnittspalts entlang einer vorgegebenen Schneidbahn das Werkstück mittels eines Laserstrahls aufgeschmolzen und die Schmelze mittels eines Schneidgases aus dem Werkstück ausgeblasen.

Mittels Laserbrennschneiden können einige eisenhaltige Metalle durch die Verwendung von Sauerstoff (O₂) als Schneidgas geschnitten werden, wobei der Werkstoff mittels des Laserstrahls erhitzt wird und im Sauerstoffstrahl verbrennt. Die beim Verbrennen freiwerdende Energie unterstützt den Schneidprozess. Im Gegensatz zum Laserbrennschneiden sollen beim Laserschmelzschneiden Oxidationen an den Schnittkanten, die beim Kontakt des heißen Werkstücks mit Sauerstoff (O₂) entstehen, vermieden werden. Deshalb wird beim Laserschmelzschneiden üblicherweise ein inertes Schneidgas, z.B. Stickstoff (N₂), verwendet. Das Schneidgas erfüllt in diesem Fall nicht nur die Aufgabe, das aufgeschmolzene Material aus dem Schnittspalt auszublasen. Gleichzeitig dient es als Kühlmittel zum Kühlen des Werkstücks am Bearbeitungsort unter Schutzgasatmosphäre. Oxidationen an der Schnittkante können so vermieden werden. Insbesondere beim Schneiden von Edelstahl erhöhen Oxidationen die Anfälligkeit für Rostbildung. Zudem entstehen durch die Oxidationen Anlauffarben an den Schnittkanten, die aus ästhetischen Gründen zu vermeiden sind.

Durch das Abkühlen der Schnittkanten unter Schutzgaseinfluss kann also grundsätzlich eine aufwendige und kostenintensive Nachbearbeitung der Schnittkanten vermieden werden.

Beim Ausschneiden eines Werkstückteils aus einem Werkstück (z.B. aus einem Metallblech) stellt das Schnittende in diesem Zusammenhang einen kritischen Bereich dar, also der Bereich, in dem das Werkstückteil aus dem Restwerkstück (auch als Restgitter bezeichnet) freigeschnitten wird. In diesem Bereich wird die Schneidgaszufuhr in der Regel unterbrochen, da der Schneidkopf unmittelbar nach dem Freischneiden des Werkstückteils zur nächsten Schneidkontur verfährt. Durch die Unterbrechung der Schneidgaszufuhr, bevor das Werkstückteil am Schnittende ausreichend abgekühlt ist, sind die Schnittkanten in diesem Bereich dem Luftsauerstoff ausgesetzt und es kommt zu Oxidationen.

Zur Vermeidung von Oxidationen am Schnittende ist es bekannt, das Schneidgas (bzw. den Schneidgasstrahl) nach dem Freischneiden des Werkstückteils noch für eine gewisse Zeit auf den Schnittspalt zu richten, um das Werkstückteil im Bereich des Schnittendes unter Schutzgaseinfluss abzukühlen. Ein Nachteil bei diesem Vorgehen besteht jedoch darin, dass das Werkstückteil nach dem Freischneiden aus dem Restgitter (Restwerkstück) herausfallen, oder in dem Restgitter absacken oder verrutschen kann und die Schnittkante dadurch nicht mehr ausreichend von dem Schutzgasstrahl abgedeckt wird. Dieser Nachteil wächst mit zunehmender Dicke des Werkstücks. Ob und wie das Werkstückteil aus dem Restgitter herausfällt, hängt unter anderem davon ab, ob und wie das Werkstückteil durch die Werkstückauflage der Maschine gestützt wird.

Auch beim Schneiden einer Innenkontur in einem zu fertigenden Werkstück, z.B. zum Ausbilden einer Bohrung in dem Werkstück, kann das auszuschneidende Werkstückteil nach dem Freischneiden aus dem Werkstück herausfallen. Es versteht sich, dass das auszuschneidende Werkstückteil in diesem Fall kein Gutteil, sondern ein Butzen, also ein auszuschneidende Abfallteil ist. Sobald der Butzen beim Freischneiden nach unten aus dem Werkstück herausfällt, ist der Schnittspalt nicht mehr in seiner ursprünglichen Form vorhanden. Das kann dazu führen, dass sich der Schneidgasstrom von der Schnittkante ablöst und sie nicht mehr ausreichend vom umgebenden Luftsauerstoff abschirmt.

Beim Schneiden im Dünnblechbereich (bis etwa 4 mm Werkstückdicke) werden zur Vermeidung des Absackens oder Herausfallens ausgeschnittener Werkstückteile gezielt Mikrojoints oder Nanojoints in dem Schnittspalt erzeugt. Mikro- und Nanojoints sind Materialstege, die ein - ansonsten vollständig ausgeschnittenes - Werkstückteil mit dem umliegenden Restgitter verbinden. Sie können erzeugt werden, indem das Werkstück entlang der Schneidbahn an vorbestimmten Stellen gar nicht bzw. nicht über die gesamte Dicke des Werkstücks aufgeschmolzen wird. Aufgrund der geringen Werkstückdicke lassen sich die Mikro- und Nanojoints manuell entfernen und das Werkstückteil so aus dem Restgitter entnehmen (zum Beispiel durch manuelles Herausdrücken des Werkstückteils aus dem Restgitter). Nanojoints weisen im Vergleich zu Mikrojoints eine Höhe auf, die geringer ist, als die Werkstückdicke. Ihr Querschnitt kann dadurch im Vergleich mit Mikrojoints noch kleiner sein und sie sind noch leichter zu durchtrennen.

Bei Werkstücken größerer Dicke lassen sich die Werkstückteile oft nicht mehr manuell aus dem Restgitter entnehmen.

Unabhängig von der nachteiligen Ausbildung von Oxidationen an der Schnittkante können die im Vergleich zum restlichen Schneidprozess veränderten Abkühlverhältnisse am Schnittende auch andere negative Auswirkungen auf das ausgeschnittene Werkstückteil haben. Beispielsweise sind die heißen Schnittkanten des Werkstückteils anfälliger für unerwünschte Verformungen beim Herausfallen des Werkstückteils aus dem Restgitter. Derartige nachteilige Auswirkungen können nicht nur beim Laserschmelzschneiden, sondern auch beim Laserbrennschneiden auftreten.

Die Aufgabe der vorliegenden Erfindung besteht darin den Stand der Technik zu verbessern. Insbesondere soll beim Ausschneiden metallischer Werkstückteile mit einer Dicke von mindestens 4 mm, insbesondere von mindestens 10 mm, die Homogenität der Schnittkante und insbesondere die Qualität der Schnittkante am Schnittende verbessert werden.

### Die Erfindung

Zur Lösung der der Erfindung zugrundeliegenden Aufgabe wird ein Laserschneidverfahren zum Ausschneiden eines Werkstückteils aus einem metallischen, insbesondere plattenförmigen, Werkstück bereitgestellt. Das Verfahren umfasst in einem ersten Schritt ein Schneiden, mittels eines Laserstrahls und eines Schneidgases und unter Verwendung vorgegebener Schneidparameter, des Werkstücks entlang einer vorgegebenen Schneidbahn. In einem zweiten Schritt umfasst das Verfahren ein Ändern der Schneidparameter in einem Endabschnitt der Schneidbahn derart, dass ein Materialsteg zwischen dem Werkstückteil und einem Restwerkstück des Werkstücks verbleibt, wobei der Materialsteg das Werkstückteil in dem Restwerkstück fixiert. In einem dritten Schritt umfasst das Verfahren ein Kühlen des Werkstücks im Bereich des Materialstegs mittels des Schneidgases und / oder mittels eines geeigneten Kühl-Fluids. In einem vierten Schritt umfasst das Verfahren ein Freischneiden des Werkstückteils aus dem Restwerkstück durch Trennen, mittels des Laserstrahls und des Schneidgases, des Materialstegs.

Es versteht sich, dass die Verfahrensschritte in der beschriebenen Reihenfolge ablaufen.

Die Schneidbahn, entlang welcher das Werkstückteil geschnitten (bzw. ausgeschnitten) wird, kann insgesamt eine geschlossene Kontur bilden. In dem ersten Schritt des Schneidens wird diese Kontur nicht vollständig geschlossen, um das Werkstückteil mittels des verbleibenden Materialstegs im Restwerkstück zu fixieren. Erst beim Freischneiden wird die Kontur vollständig geschlossen und das Werkstückteil vollständig aus dem Restwerkstück herausgetrennt. Gleichwohl umfasst das Ausschneiden des Werkstückteils auch einen Fall, in dem das Werkstückteil sich in einem Randbereich des Werkstücks befindet, sodass das Werkstück und das Werkstückteil eine gemeinsame Außenkante aufweisen. Zum Ausschneiden des Werkstückteils aus dem Werkstück führt die Schneidbahn dann von der gemeinsamen Außenkante in das Werkstück hinein und endet an einer anderen Stelle der gemeinsamen Außenkante.

Vorzugsweise können Laserstrahl und Schneidgas beim Schneiden aus einem gemeinsamen Schneidkopf austreten. Das Schneidgas kann dadurch auf einfache Weise mit der Bewegung des Laserstrahls mitgeführt werden. Das Schneidgas kann insbesondere unter einem vorgegebenen Schneidgasdruck in einem gerichteten Strahl auf den Bearbeitungsort des Laserstrahls am Werkstück gerichtet werden.

Durch das Kühlen des Werkstücks, während das Werkstückteil durch den Materialsteg in dem Restwerkstück gehalten wird, kann verhindert werden, dass das Werkstückteil aus dem Restwerkstück (d.h. aus dem Restgitter) herausfällt, absackt oder verkippt und unter Einfluss von Luftsauerstoff langsam abkühlt. Der Schnittspalt wird durch den Materialsteg offengehalten. Durch die fixierte Lage des Werkstückteils wird die Reproduzierbarkeit beim Kühlen des Werkstückteils erhöht. Das aktive Kühlen des Werkstückteils im Endabschnitt der Schneidbahn kann zudem die Homogenität der Schnittkante steigern. Mit anderen Worten werden Veränderungen der Schnittkante im Endabschnitt der Schneidbahn durch das fortgesetzte Kühlen der Schnittkante in diesem Bereich verringert.

Vorzugsweise kann als Schneidgas ein inertes Gas, insbesondere Stickstoff (N₂), verwendet werden. Als zusätzliches oder alternatives Kühl-Fluid kann ein inertes Gas verwendet werden, das sich von dem Schneidgas unterscheidet. Insbesondere kann als zusätzliches oder alternatives Kühl-Fluid Helium (He) verwendet werden. Ein inertes Gas zeichnet sich durch seine Reaktionsträgheit in Bezug auf das Material des zu schneidenden Werkstücks bei den herrschenden Prozesstemperaturen aus. Obgleich auch Stickstoff (N₂) in vielen Anwendungen inert ist, weist Helium (He) im Vergleich mit Stickstoff (N₂) eine bessere Wärmeleitfähigkeit auf. Durch die Verwendung von Helium (He) als zusätzliches oder alternatives Kühl-Fluid kann deshalb der Abkühlprozess weiter optimiert werden.

Gemäß einer Variante kann das Kühlen des Werkstücks umfassen: Abschalten des Laserstrahls für einen vorbestimmten Zeitraum, vorzugsweise für weniger als 5 Sekunden, insbesondere für weniger als eine Sekunde. Durch das Abschalten des Laserstrahls wird die mit der Lasereinstrahlung verbundene Erwärmung des Werkstücks unterbrochen.

Das Kühlen des Werkstücks kann ferner umfassen: Beaufschlagen, während der Laserstrahl abgeschaltet ist, des zu kühlenden Bereichs des Werkstücks mit dem Schneidgas, wobei ein Schneidgasdruck während des Kühlens größer oder gleich einem Schneidgasdruck während des Schneidens des Werkstücks ist.Durch Blasen des Schneidgases in den Schnittspalt in dem zu kühlenden Bereich kühlt das Werkstück in diesem Bereich ab. Durch eine Erhöhung des Schneidgasdruckes kann grundsätzlich der Abkühlprozess beschleunigt werden. Eine zusätzliche Beschleunigung des Abkühlprozesses kann durch ein zusätzliches Beaufschlagen des zu kühlenden Bereichs mit Wassernebel oder einem anderen geeigneten Kühl-Fluid erreicht werden. Ein solches zusätzliches Kühl-Fluid kann beispielsweise über eine Querblasdüse auf den Schnittspalt gerichtet werden. Grundsätzlich kann das Werkstück auch ausschließlich mittels eines vom Schneidgas verschiedenen Kühl-Fluids über eine Querblasdüse gekühlt werden.

Aus ökonomischen Gründen ist es grundsätzlich wünschenswert, die Abkühlzeit gering zu halten. Ein Ziel ist es, die Schnittkante des Werkstückteils im Endabschnitt der Schneidbahn optisch an den Rest der Schnittkante anzugleichen. Abhängig von den individuellen Anforderungen an die Optik der Schnittkante kann es ausreichend sein, das Werkstück wie oben beschrieben für weniger als eine Sekunde zu kühlen. Insbesondere mit zunehmender Werkstückdicke kann es erforderlich sein, die Abkühlzeit zu erhöhen.

Gemäß einer Variante kann der Materialsteg einen vorbestimmten minimalen Querschnitt aufweisen, sodass das Werkstückteil während des Kühlens gerade noch in seiner ursprünglichen Position im Restwerkstück fixiert wird. Der Querschnitt des Materialstegs wird über die Höhe und die Breite des Materialstegs bestimmt. Die Höhe des Materialstegs kann maximal der Dicke des Werkstücks entsprechen. Die Breite des Materialstegs entspricht der Ausdehnung des Materialstegs in Schneidrichtung. Der Materialsteg weist außerdem eine Länge auf, die der Breite des Schnittspalts entspricht.

Durch das Fixieren bzw. Halten des Werkstückteils in seiner ursprünglichen Position in dem Restwerkstück kann das Werkstückteil nicht in dem Restwerkstück verkippen oder aus diesem herausfallen. Das hat den Vorteil, dass der Schnittspalt offengehalten wird. So bleibt die Schnittkante des Werkstückteils in dem Endabschnitt der Schneidbahn durch das Schneidgas weiter erreichbar. Der Querschnitt des Materialstegs sollte also groß genug sein, um eine ausreichende Stabilität des Materialstegs zu gewährleisten. Auf der anderen Seite sollte der Querschnitt des Materialstegs möglichst klein sein, um den zum Freischneiden des Werkstücks erforderlichen Energieeintrag in das Werkstück zu minimieren. Es versteht sich, dass der minimal erforderliche Querschnitt des Materialstegs von mehreren Faktoren abhängt. Zu diesen Faktoren zählen das Material des Werkstücks, das Volumen des Werkstückteils (bzw. dessen Gewicht), sowie die Schwerpunktlage des Werkstückteils in Bezug auf den Materialsteg und ob bzw. an wie vielen Stellen das freizuschneidende Teil von der Werkstückauflage der Maschine unterstützt wird.

Gemäß einer Variante kann das Ändern der Schneidparameter den folgenden Unterschritt umfassen: Abschalten des Lasers, bevor das Ende der Schneidbahn beim Schneiden des Werkstücks erreicht ist.

Das Ende der Schneidbahn kann insbesondere die Position auf der Schneidbahn sein, in der die zu schneidende Kontur geschlossen wird.

Durch das Abschalten des Laserstrahls kurz vor dem Ende der Schneidbahn kann der Materialsteg als sogenannter "Mikrojoint" ausgebildet werden. In diesem Fall kann der Materialsteg eine Höhe aufweisen, die der Dicke des Werkstücks entspricht. Die Breite des Materialstegs sollte so gering wie möglich sein. Die optimale Breite des Materialstegs hängt von dem Kippmoment ab, dem der Materialsteg zum Halten des Werkstückteils standhalten muss.

Ein Mikrojoint kann auf einfache Weise erzeugt werden, ohne, dass ein aufwendiges Anpassen der Schneidparameter erforderlich wäre. Der Laserstrahl muss dazu lediglich an einer Stelle abgeschaltet werden, kurz bevor das Ende der Schneidbahn erreicht ist.

Gemäß einer alternativen Variante kann das Ändern der Schneidparameter die folgenden Schritte umfassen: Ändern der Schneidparameter derart, dass das Werkstück nur noch bis zu einer Tiefe aufgeschmolzen wird, die geringer ist als die Werkstückdicke; und Schneiden des Werkstücks mit den geänderten Schneidparametern bis zum Ende der Schneidbahn, sodass der Materialsteg eine Höhe aufweist, die geringer ist als die Werkstückdicke.

Auf diese Weise kann der Materialsteg als sogenannter "Nanojoint" ausgebildet werden. Durch die Reduzierung der Höhe des Materialstegs im Vergleich zum Mikrojoint kann der Querschnitt des Materialstegs weiter reduziert werden.

Das Ändern von Schneidparametern zum Erzeugen eines Nanojoints wird beispielsweise in der Patentanmeldung WO 2019025327 A2 der Anmelderin beschrieben.

Das Ändern der Schneidparameter zum Erzeugen eines Nanojoints kann beispielsweise ein Reduzieren einer Laserleistung, ein Erhöhen einer Schneidgeschwindigkeit und / oder ein Ändern einer Fokuslage oder eines Fokusdurchmessers des Laserstrahls umfassen. Zum Kühlen des Werkstücks im Bereich des Nanojoints kann es vorgesehen sein, dass der Schneidkopf entlang der Schneidbahn über die Breite des Nanojoints zurückbewegt wird, während das Schneidgas aus dem Schneidkopf in den Schnittspalt geblasen wird. Alternativ kann das Schneidgas primär auf das zuletzt geschnittene Ende des Nanojoints gerichtet werden. In diesem Fall muss der Schneidkopf nicht zurückbewegt werden.

Das Freischneiden des Werkstückteils aus dem Restwerkstück kann die folgenden Unterschritte umfassen: Einschalten des Lasers; und Freischneiden, mittels des Laserstrahls und des Schneidgases, des Werkstückteils aus dem Restwerkstück durch Trennen des Materialstegs, wobei die Schneidparameter beim Freischneiden des Werkstückteils so eingestellt werden, dass weniger Energie in das Werkstück eingekoppelt wird als beim vorhergehenden Schneiden des Werkstücks.

Das Trennen des Materialstegs zum Freischneiden des Werkstückteils kann grundsätzlich nach dem gleichen Prinzip erfolgen, wie das Schneiden des Werkstücks. Es versteht sich deshalb, dass zum Freischneiden des Werkstückteils auch die gleichen Schneidparameter verwendet werden, wie beim vorhergehenden Schneiden des Werkstücks. Durch die kurze Einwirkdauer des Laserstrahls beim Durchtrennen des Mikro- oder Nanojoints (d.h. des Materialstegs) wird auch in diesem Fall weniger Wärme in das Werkstück eingebracht als beim Schneiden des Werkstücks über längere Strecken. Durch eine geringere Erwärmung des Werkstücks beim Freischneiden kann die Ausbildung von Oxidationen an der Schnittkante des Werkstückteils nach dem Freischneiden reduziert werden.

Das Einstellen der Schneidparameter beim Freischneiden des Werkstückteils kann ein Verringern einer Laserleistung und / oder ein Erhöhen einer Schneidgeschwindigkeit und / oder ein Verändern einer Fokuslage und / oder eines Fokusdurchmessers des Laserstrahls umfassen. Zusätzlich oder alternativ kann auch der Druck des Schneidgases zum Freischneiden des Werkstückteils erhöht werden. Der erhöhte Druck des Schneidgases kann die Kühlwirkung auf das Werkstückteil noch während des Freischneidens positiv beeinflussen. Es versteht sich, dass sich die relativen Angaben zum Einstellen der Schneidparameter auf die entsprechenden Schneidparameter beim vorherigen Schneiden des Werkstücks beziehen.

Je nach Position des Schneidkopfes nach dem Kühlen des Werkstücks kann der Materialsteg entweder in der ursprünglichen Schneidrichtung oder entgegen der ursprünglichen Schneidrichtung abgeschnitten (d.h. getrennt) werden. Bei einem Mikrojoint kann es vorgesehen sein, dass der Schneidkopf während des Kühlens an dem in Schneidrichtung vorderen Ende des Mikrojoints stehen bleibt, das heißt an der Position, an welcher der Laserstrahl abgeschaltet wurde. In diesem Fall kann das Freischneiden in derselben Richtung erfolgen, wie das vorhergehende Schneiden des Werkstücks. Bei einem Nanojoint kann es dagegen vorgesehen sein, dass der Schneidkopf während des Kühlens an dem in Schneidrichtung hinteren Ende des Nanojoints stehen bleibt. In diesem Fall kann das Freischneiden in einer der vorhergehenden Schneidrichtung entgegengesetzten Richtung erfolgen. Auf diese Weise kann jeweils ein zusätzlicher Verfahrweg des Schneidkopfes vermieden werden.

Das Werkstück kann eine Dicke von mindestens 4 mm, vorzugsweise von mindestens 10 mm, aufweisen. Das Werkstück kann insbesondere ein Metallblech sein. Die vorteilhaften Wirkungen des erfindungsgemäßen Verfahrens treten insbesondere beim Schneiden im Dickblechbereich zum Vorschein. Das hängt unter anderem damit zusammen, dass der Wärmeeintrag in das Werkstück mit zunehmender Dicke des Werkstücks steigt. Beispielsweise kann das Werkstück auch eine Dicke von 40 mm oder mehr aufweisen.

Zum Lösen der der Erfindung zugrundeliegenden Aufgabe wird ferner eine Laserschneidmaschine zum Schneiden metallischer, insbesondere plattenförmiger, Werkstücke bereitgestellt, die dazu ausgebildet ist, das Laserschneidverfahren gemäß einem der oben beschriebenen Varianten durchzuführen.

### Ausführungsbeispiele

Im Folgenden werden Aspekte der Erfindung anhand von Zeichnungen näher erläutert. Es zeigen:
- Figur 1:: eine schematische Darstellung einer erfindungsgemäßen Laserschneidmaschine;
- Figur 2a:: schematisch ein Werkstück mit einem daraus auszuscheidenden Werkstückteil;
- Figur 2b:: schematisch den Endbereich einer Schneidbahn im Ausschnitt A von Figur 2a;
- Figur 3a:: schematisch einen als Mikrojoint ausgebildeten Materialsteg im Querschnitt; und
- Figur 3b:: schematisch einen als Nanojoint ausgebildeten Materialsteg im Querschnitt.

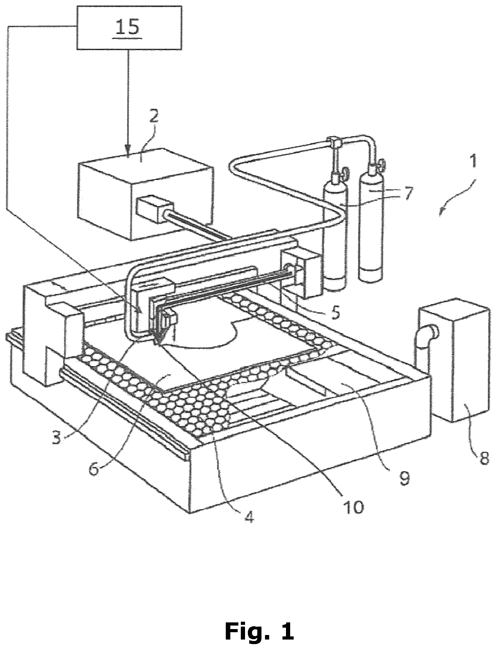

Figur 1 zeigt exemplarisch eine Laserschneidmaschine 1, die zur Durchführung eines erfindungsgemäßen Verfahrens geeignet ist. Die Laserschneidmaschine 1 umfasst einen Laserstrahlerzeuger 2 (z.B. einen CO₂-Laser, Diodenlaser oder Festkörperlaser), einen verfahrbaren Schneidkopf 3 und eine Werkstückauflage 4. Im Laserstrahlerzeuger 2 wird ein Laserstrahl 5 erzeugt, der mittels eines (nicht gezeigten) Lichtleitkabels oder (nicht gezeigten) Umlenkspiegeln vom Laserstrahlerzeuger 2 zum Bearbeitungskopf 3 geführt wird. Auf der Werkstückauflage 4 ist ein plattenförmiges Werkstück 6 angeordnet. Der Laserstrahl 5 wird mittels einer im Bearbeitungskopf 3 angeordneten Fokussieroptik auf das Werkstück 6 gerichtet. Die Laserschneidmaschine 1 wird darüber hinaus mit Schneidgas 7, beispielsweise Stickstoff (N₂), versorgt. Die Verwendung des jeweiligen Schneidgases 7 ist vom Werkstückmaterial und von Qualitätsanforderungen an die Schnittkanten abhängig. Weiterhin ist eine Absaugeinrichtung 8 vorhanden, die mit einem Absaugkanal 9, der sich unter der Werkstückauflage 4 befindet, verbunden ist. Das Schneidgas 7 wird einer Schneidgasdüse 10 des Schneidkopfes 3 zugeführt, aus der es zusammen mit dem Laserstrahl 5 austritt.

Beim Laserstrahlschneiden wird das Werkstück 6 unter Verwendung vorgegebener Schneidparameter entlang einer vorgegebenen Kontur mittels des Laserstrahls 5 aufgeschmolzen und mittels des Schneidgases 7 nach unten ausgeblasen, wodurch ein Schnittspalt entsteht. Zur Steuerung der Schneidparameter umfasst die Laserschneidmaschine 1 ferner eine Steuereinheit 15.

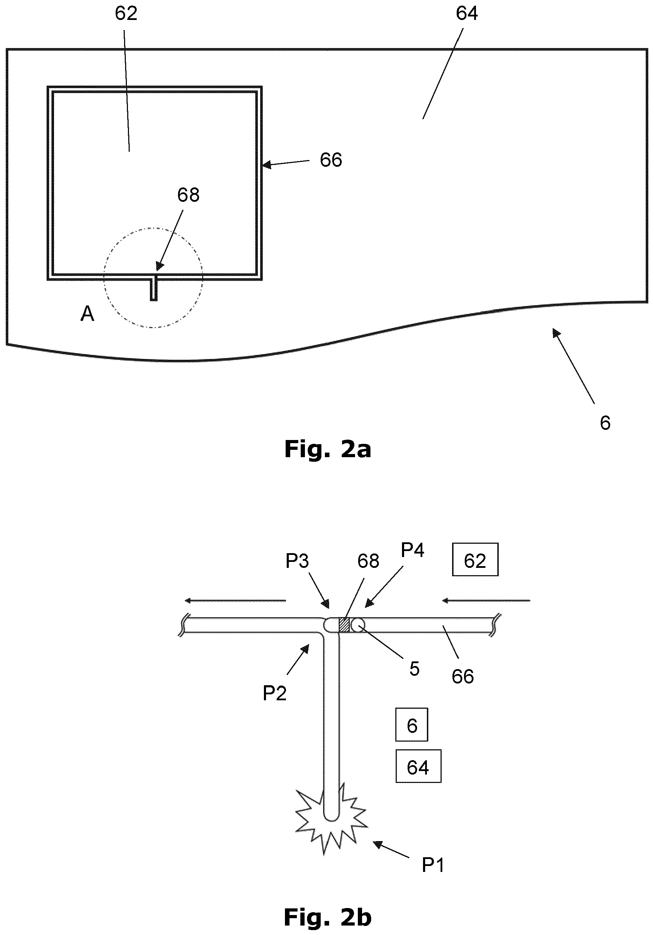

Anhand der Figuren 2a und 2b werden im Folgenden Aspekte eines Verfahrens gemäß der vorliegenden Erfindung näher erläutert. In Figur 2a ist schematisch ein Ausschnitt eines plattenförmigen Werkstücks 6 in der Draufsicht dargestellt. In dem Werkstück 6 ist entlang einer geschlossenen, rechteckförmigen Kontur ein Schnittspalt 66 ausgebildet, der das Werkstück 6 in ein Werkstückteil 62 (bzw. Schnittteil oder Gutteil) und ein Restwerkstück 64 (bzw. Restgitter) teilt. Der Schnittspalt 66 schließt die Kontur jedoch nicht vollständig. So ist der Schnittspalt 66 durch einen Materialsteg 68 unterbrochen, der das Werkstückteil 62 mit dem Restwerkstück 64 verbindet und es darin fixiert. Zum Ausschneiden des Werkstückteils 62 aus dem Werkstück 6 kann ein Verfahren gemäß der vorliegenden Erfindung angewandt werden. Das Schneiden des Werkstücks 6 (in Figur 2a im Uhrzeigersinn) erfolgt unter Verwendung vorgegebener Schneidparameter, die unter anderem von der Dicke und dem Material des Werkstücks 6 abhängen. In einem Endabschnitt der Schneidbahn werden die Schneidparameter derart geändert, dass der Materialsteg 68 entsteht, der das Werkstückteil 62 in dem Restwerkstück 64 fixiert. Insbesondere kann das erreicht werden, indem zur Erzeugung eines Mikrojoints der Laserstrahl 5 abgeschaltet wird, bevor das Ende der Schneidbahn erreicht ist. Alternativ können die Schneidparameter, z.B. durch Reduzieren der Laserstrahlleistung, in dem Endabschnitt der Schneidbahn derart verändert werden, dass das Werkstück 6 in diesem Abschnitt nicht mehr über die gesamte Dicke geschnitten wird. Auf diese Weise kann der Materialsteg 68 als Nanojoint ausgebildet werden.

Figur 2b zeigt den Ausschnitt A aus Figur 2a. Anhand von Figur 2b kann der Verlauf des Schneidprozesses nachvollzogen werden. Der Laserstrahl 5 sticht in der Position P1 in das Werkstück 6 ein und verfährt zu der zu schneidenden Kontur, die er an Position P2 erreicht. Der Laserstrahl 5 fährt anschließend die Kontur des Werkstückteils 62 ab und erzeugt im Zusammenspiel mit dem Schneidgas 7 den durchgehenden Schnittspalt 66. Mit Erreichen der Position P3, kurz vor dem Ende der Schneidbahn (Position P4), werden die Schneidparameter derart geändert, dass der Materialsteg 68 als Mikrojoint oder als Nanojoint entsteht. Der Materialsteg 68 ist ausreichend stabil ausgebildet, dass er das Werkstückteil 62 in dem Restwerkstück 64 hält und ein Verkippen des Werkstückteils 62 gegenüber dem Restwerkstück 64 verhindert.

Nachdem der Materialsteg 68 erzeugt ist, kann der Laserstrahl 5 erfindungsgemäß abgeschaltet werden, während das Schneidgas 7 weiterhin auf das durch den Laserstrahl 5 erhitzte Material im Bereich des Materialstegs 68 gerichtet wird. Während es vorteilhaft sein kann, sowohl beim Schneiden des Werkstücks 6 als auch beim Kühlen dasselbe inerte Schutzgas, insbesondere Stickstoff (N₂), zu verwenden, ist das nicht zwingend erforderlich. Alternativ ist es beispielsweise möglich, zunächst mit Stickstoff (N₂) als Prozessgas zu schneiden und für das Abkühlen der Schnittkanten am Schnittspaltende auf ein anderes inertes Gas, z.B. Helium (He) (als Kühl-Fluid), umzuschalten. Aufgrund seiner guten Wärmeleitfähigkeit kann durch die Verwendung von Helium (He) als Schutzgas die Kühlwirkung gegenüber Stickstoff (N₂) weiter gesteigert und die Abkühlzeit reduziert werden. Um ungeachtet von Oxidationen lediglich eine gleichmäßige Abkühlung der Schnittkante des Werkstückteils 62 zu erzielen ist es auch vorstellbar, dass das erfindungsgemäße Verfahren in einem Brennschneidprozess mit Sauerstoff (O₂) als Schneidgas durchgeführt wird. In diesem Fall können die Vorteile des erfindungsgemäßen Verfahrens insbesondere in einer Steigerung der Homogenität der Schnittkante liegen.

Der Kühlprozess kann durch eine Erhöhung des Gasdrucks beschleunigt werden.

Nachdem das Werkstück 6 weit genug abgekühlt ist, wird der Laserstrahl 5 wieder eingeschaltet und das Werkstückteil 62 wird durch Trennen des Materialstegs 68 freigeschnitten. Die Solltemperatur des Werkstücks 6 nach dem Abkühlen hängt von dem Ziel des Abkühlens ab und variiert unter anderem abhängig vom Material des Werkstücks 6. Insbesondere kann es beabsichtigt sein, Oxidbildungen an der Schnittkante beim Schneiden von Edelstahl zu reduzieren, um Anlauffarben der Schnittkante zu vermeiden. Abhängig von der Dicke des Werkstücks kann bereits bei einer Abkühldauer von weniger als einer Sekunde eine wesentliche Verringerung von Anlauffarben an der Schnittkante erzielt werden gegenüber einem herkömmlichen Verfahren, bei dem das Werkstück 6 ohne Kühlpause vollständig ausgeschnitten (also auch freigeschnitten) wird.

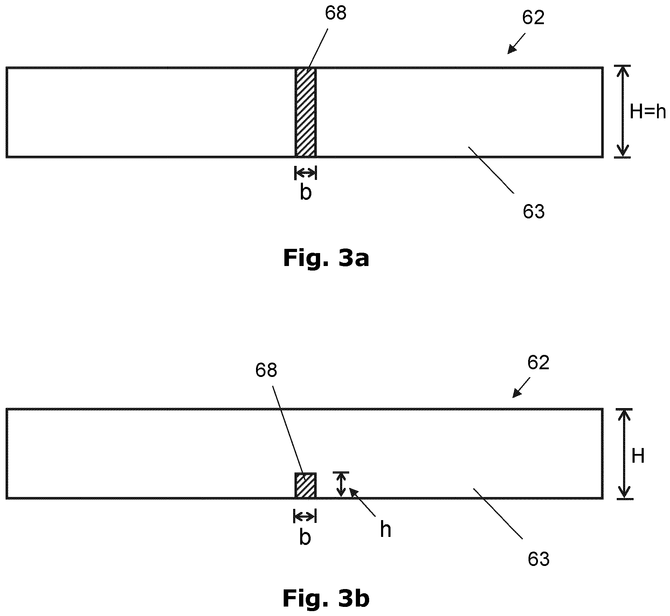

Die Figuren 3a und 3b zeigen schematisch eine Schnittansicht durch einen Materialsteg 68, der als Mikrojoint (Figur 3a) beziehungsweise als Nanojoint (Figur 3b) ausgebildet ist. Die Zeichnungsebene der Figuren 3a und 3b erstreckt sich jeweils entlang des Schnittspalts 66 parallel zur Schnittkante 63 des Werkstückteils 62 (also senkrecht zur Werkstückoberfläche). Damit der Materialsteg 68 eine ausreichende Stabilität aufweist, um das Werkstückteil 62 in dem Restwerkstück zu halten bzw. zu fixieren, muss er einen minimal erforderlichen Querschnitt aufweisen. Der Querschnitt des Materialstegs 68 kann über die Höhe h und die Breite b des Materialstegs 68 näherungsweise bestimmt werden. Dabei versteht es sich, dass die Querschnittsform des Materialstegs 68 in der Praxis von der vereinfachten Rechteckform gemäß den Figuren 3a und 3b in der Regel abweicht. Verfahren zur Bestimmung nicht-rechteckförmiger Querschnitte sind dem Fachmann ebenso geläufig.

Figur 3a zeigt einen als Mikrojoint ausgebildeten Materialsteg 68, dessen Höhe h der Dicke H des Werkstücks 6 entspricht. Figur 3b zeigt im Vergleich einen als Nanojoint ausgebildeten Materialsteg 68, dessen Höhe h geringer ist als die Dicke H des Werkstücks 6. Grundsätzlich soll der Querschnitt des Materialstegs 68 so gering wie möglich gehalten werden, damit auch die Erwärmung des Werkstücks beim Trennen des Materialstegs 68 möglichst gering gehalten werden kann. Im Falle eines Mikrojoints (Figur 3a) lässt sich der Querschnitt des Materialstegs 68 nur über die Breite des Materialstegs 68 regulieren. Insbesondere beim Schneiden von Werkstücken 6 großer Dicke H, zum Beispiel jenseits von 10 mm, kann es vorteilhaft sein, den Materialsteg 68 als Nanojoint (Figur 3b) auszubilden. In diesem Fall lässt sich der Querschnitt des Materialstegs neben der Breite b auch über dessen Höhe h regulieren. Das erhöht die Möglichkeiten bei der Ausbildung eines Materialstegs optimaler Größe.

## Patentansprüche

1. Laserschneidverfahren zum Ausschneiden eines Werkstückteils (62) aus einem metallischen, insbesondere plattenförmigen, Werkstück (6), das Verfahren umfassend die folgenden Schritte:
Schneiden, mittels eines Laserstrahls (5) und eines Schneidgases (7) und unter Verwendung vorgegebener Schneidparameter, des Werkstücks (6) entlang einer vorgegebenen Schneidbahn;
Ändern der Schneidparameter in einem Endabschnitt der Schneidbahn derart, dass ein Materialsteg (68) zwischen dem Werkstückteil (62) und einem Restwerkstück (64) des Werkstücks (6) verbleibt, wobei der Materialsteg (68) das Werkstückteil (62) in dem Restwerkstück (64) fixiert; und **gekennzeichnet durch** die folgenden Schritte :
Kühlen des Werkstücks (6) im Bereich des Materialstegs (68) mittels des Schneidgases (7) und / oder mittels eines geeigneten Kühl-Fluids; und
Freischneiden des Werkstückteils (62) aus dem Restwerkstück (64) durch Trennen, mittels des Laserstrahls (5) und des Schneidgases (7), des Materialstegs (68).

2. Verfahren nach Anspruch 1, wobei als Schneidgas (7) ein inertes Gas, insbesondere Stickstoff (N2) verwendet wird.

3. Verfahren nach einem der vorhergehenden Ansprüche, wobei das Kühlen des Werkstücks (6) umfasst:
Abschalten des Laserstrahls (5) für einen vorbestimmten Zeitraum, vorzugsweise für weniger als 5 Sekunden, insbesondere für weniger als eine Sekunde.

4. Verfahren nach Anspruch 3, wobei das Kühlen des Werkstücks ferner umfasst:
Beaufschlagen, während der Laserstrahl (5) abgeschaltet ist, des zu kühlenden Bereichs mit dem Schneidgas (7), wobei ein Schneidgasdruck während des Kühlens größer oder gleich einem Schneidgasdruck während des Schneidens des Werkstücks (6) ist.

5. Verfahren nach einem der vorhergehenden Ansprüche, wobei der Materialsteg (68) einen vorbestimmten minimalen Querschnitt aufweist, sodass das Werkstückteil (62) während des Kühlens gerade noch in seiner ursprünglichen Position im Restwerkstück (64) fixiert wird.

6. Verfahren nach einem der vorhergehenden Ansprüche, wobei das Ändern der Schneidparameter umfasst:
Abschalten des Laserstrahls (5), bevor das Ende der Schneidbahn beim Schneiden des Werkstücks (6) erreicht ist.

7. Verfahren nach einem der Ansprüche 1 bis 5, wobei das Ändern der Schneidparameter umfasst:
Ändern der Schneidparameter derart, dass das Werkstück (6) nur noch bis zu einer Tiefe aufgeschmolzen wird, die geringer ist als die Werkstückdicke (H); und
Schneiden des Werkstücks (6) mit den geänderten Schneidparametern bis zum Ende der Schneidbahn, sodass der Materialsteg (68) eine Höhe (h) aufweist, die geringer ist als die Werkstückdicke (H).

8. Verfahren nach einem der vorhergehenden Ansprüche, wobei das Freischneiden umfasst:
Einschalten des Laserstrahls (5); und
Freischneiden, mittels des Laserstrahls (5) und des Schneidgases (7), des Werkstückteils (62) aus dem Restwerkstück (64) durch Trennen des Materialstegs (68), wobei die Schneidparameter beim Freischneiden des Werkstückteils (62) so eingestellt werden, dass weniger Energie in das Werkstück (6) eingekoppelt wird als beim vorhergehenden Schneiden des Werkstücks (6).

9. Verfahren nach Anspruch 8, wobei das Einstellen der Schneidparameter beim Freischneiden des Werkstückteils (62) ein Verringern einer Laserleistung und / oder ein Erhöhen einer Schneidgeschwindigkeit und / oder ein Verändern einer Fokuslage und / oder eines Fokusdurchmessers des Laserstrahls (5) umfasst.

10. Verfahren nach einem der vorhergehenden Ansprüche, wobei das Werkstück (5) eine Dicke (H) von mindestens 4 mm, vorzugsweise von mindestens 10 mm, aufweist.

11. Laserschneidmaschine (1), mit einem Laserstrahlerzeuger (2), einem verfahrbaren Schneidkopf (3) und einer Werkstückauflage (4), wobei der Laserstrahl (5) mittels einer im Bearbeitungskopf (3) angeordneten Fokussieroptik auf ein auf der Werstückauflage angeordnetes Werkstück (6) gerichtet wird, und wobei, die Laserschneidmaschine (1) mit einem Schneidgas (7) versorgt wird, welches einer Schneidgasdüse (10) des Schneidkopfes (3) zugeführt wird, aus der es zusammen mit dem Laserstrahl (5) austritt, **gekennzeichnet durch** eine Steuereinheit (15), die die Schneidparameter zur Durchführung eines Verfahrens gemäß Anspruch 1 steuert.

## Claims

1. A laser cutting method for cutting out a workpiece part (62) from a metallic, in particular plate-shaped, workpiece (6), the method comprising the following steps:
cutting the workpiece (6) along a predefined cutting path, using a laser beam (5) and a cutting gas (7), and using predefined cutting parameters;
changing the cutting parameters in an end portion of the cutting path so that a material web (68) remains between the workpiece part (62) and a workpiece remainder (64) of the workpiece (6), wherein the material web (68) fixes the workpiece part (62) in the workpiece remainder (64); and **characterized by** the following steps:
cooling the workpiece (6) in the region of the material web (68) using the cutting gas (7) and/or a suitable cooling fluid; and
snipping out the workpiece part (62) from the workpiece remainder (64) by separating the material web (68) using the laser beam (5) and the cutting gas (7).

2. The method according to claim 1, wherein an inert gas, in particular nitrogen (N2), is used as the cutting gas (7).

3. The method according to one of the preceding claims, wherein the cooling of the workpiece (6) comprises:
switching off the laser beam (5) for a predetermined period of time, preferably for less than 5 seconds, in particular for less than one second.

4. The method according to claim 3, wherein the cooling of the workpiece further comprises:
impinging the region to be cooled with the cutting gas (7) while the laser beam (5) is switched off, wherein a cutting gas pressure during the cooling is higher than or equal to a cutting gas pressure during the cutting of the workpiece (6).

5. The method according to one of the preceding claims, wherein the material web (68) has a predetermined minimum cross-section such that the workpiece part (62) is fixed in its original position in the workpiece remainder (64) during the cooling.

6. The method according to one of the preceding claims, wherein changing the cutting parameters comprises:
switching off the laser beam (5) before the end of the cutting path is reached, while cutting the workpiece (6).

7. The method according to claims 1 to 5, wherein changing the cutting parameters comprises:
changing the cutting parameters in such a way that the workpiece (6) is only fused down to a depth that is less than the workpiece thickness (H); and
cutting the workpiece (6) using the changed cutting parameters up to the end of the cutting path such that the material web (68) has a height (h) that is less than the workpiece thickness (H).

8. The method according to one of the preceding claims, wherein the snipping-out step comprises:
turning on the laser beam (5); and
snipping out the workpiece part (62) from the workpiece remainder (64) using the laser beam (5) and the cutting gas (7) by separating the material web (68), wherein the cutting parameters are adjusted while snipping out the workpiece part (62) such that less energy is coupled into the workpiece (6) than in the previous cutting of the workpiece (6).

9. The method according to claim 8, wherein the adjusting of the cutting parameters while snipping out the workpiece part (62) comprises a reduction of a laser power and/or an increase in a cutting speed and/or a changing of a focus point and/or a focus diameter of the laser beam (5).

10. The method according to one of the previous claims, wherein the workpiece (5) has a thickness (H) of at least 4 mm, preferably of at least 10 mm.

11. A laser cutting machine (1), comprising a laser beam generator (2), a movable cutting head (3) and a workpiece support (4), wherein a focusing optics system arranged in the processing head (3) is used to direct the laser beam (5) onto a workpiece (6) arranged on the workpiece support, and wherein the laser cutting machine (1) is supplied with a cutting gas (7) which is fed to a cutting gas nozzle (10) of the cutting head (3), the gas exiting the nozzle together with the laser beam (5), **characterized by** a control unit (15) that controls the cutting parameters for carrying out a method according to claim 1.

## Revendications

1. Procédé de découpe au laser pour extraire par découpe une partie de pièce (62) à partir d'une pièce (6) métallique, en particulier de forme plate, le procédé comprenant les étapes suivantes :
découpe de la pièce (6) le long d'une trajectoire de découpe prédéfinie au moyen d'un faisceau laser (5) et d'un gaz de découpe (7) et en utilisant des paramètres de découpe prédéfinis ;
modification des paramètres de découpe dans une section terminale de la trajectoire de découpe de manière à ce qu'un pont de maintien de matériau (68) reste entre la partie de pièce (62) et l'élément restant de la pièce (64) de la pièce (6), dans lequel ce pont de maintien de matériau (68) fixe la partie de pièce (62) dans l'élément restant de la pièce (64) ; et **caractérisé par** les étapes suivantes :
refroidissement de la pièce (6) dans la zone du pont de maintien de matériau (68) au moyen du gaz de découpe (7) et/ou au moyen d'un fluide de refroidissement approprié ; et
dissociation par découpe de la partie de pièce (62) à partir de l'élément restant de la pièce (64) par séparation, au moyen du faisceau laser (5) et du gaz de découpe (7), du pont de maintien de matériau (68).

2. Procédé selon la revendication 1, dans lequel est utilisé en tant que gaz de découpe (7) un gaz inerte, en particulier de l'azote (N2).

3. Procédé selon l'une des revendications précédentes, dans lequel le refroidissement de la pièce (6) comprend :
la désactivation du faisceau laser (5) pendant une période prédéterminée, de préférence moins de 5 secondes, en particulier moins d'une seconde.

4. Procédé selon la revendication 3, dans lequel le refroidissement de la pièce comprend en outre :
l'exposition, pendant que le faisceau laser (5) est désactivé, de la zone à refroidir au gaz de découpe (7), dans laquelle la pression du gaz de découpe est, pendant le refroidissement, supérieure ou égale à la pression du gaz de découpe lors de la découpe de la pièce (6).

5. Procédé selon l'une des revendications précédentes, dans lequel le pont de maintien de matériau (68) présente une coupe transversale minimale prédéterminée, de sorte que la partie de pièce (62) est juste encore fixée dans sa position initiale dans l'élément restant de la pièce (64) pendant le refroidissement.

6. Procédé selon l'une des revendications précédentes, dans lequel la modification des paramètres de découpe comprend :
la désactivation du faisceau laser (5) avant que l'extrémité de la trajectoire de découpe lors de la découpe de la pièce (6) ne soit atteinte.

7. Procédé selon l'une des revendications 1 à 5, dans lequel la modification des paramètres de découpe comprend :
la modification des paramètres de découpe de manière à ce que la pièce (6) ne soit plus fondue que jusqu'à une profondeur inférieure à l'épaisseur de la pièce (H) ; et
la découpe de la pièce (6) avec les paramètres de découpe modifiés jusqu'à l'extrémité de la trajectoire de découpe, de sorte que le pont de maintien de matériau (68) présente une hauteur (h) inférieure à l'épaisseur de la pièce (H).

8. Procédé selon l'une des revendications précédentes, dans lequel la dissociation par découpe comprend :
l'activation du faisceau laser (5) ; et
la dissociation par découpe, au moyen du faisceau laser (5) et du gaz de découpe (7), de la partie de pièce (62) à partir de l'élément restant de la pièce (64) par section du pont de maintien de matériau (68), dans lequel les paramètres de découpe sont ainsi ajustés lors de la dissociation par découpe de la partie de pièce (62), de manière à ce que moins d'énergie soit introduite dans la pièce (6) qu'au cours de la découpe précédente de la pièce (6).

9. Procédé selon la revendication 8, dans lequel l'ajustement des paramètres de découpe lors de la dissociation par découpe de la partie de pièce (62) comprend une diminution de la puissance du laser et/ou une augmentation la vitesse de découpe et/ou une modification de la position du foyer et/ou du diamètre du foyer du faisceau laser (5).

10. Procédé selon l'une des revendications précédentes, dans lequel la pièce (5) présente une épaisseur (H) d'au moins 4 mm, de préférence d'au moins 10 mm.

11. Machine de découpe au laser (1), avec un générateur de faisceau laser (2), une tête de découpe (3) mobile et un support de pièce (4), dans lequel le faisceau laser (5) est dirigé sur une pièce (6) disposée sur le support de pièce, au moyen d'une optique de mise au point disposée dans la tête de traitement (3), et dans laquelle la machine de découpe au laser (1) est alimentée en gaz de découpe (7), lequel est amené à une buse de gaz de découpe (10) de la tête de découpe (3), d'où il s'échappe en même temps que le faisceau laser (5), **caractérisé par** une unité de commande (15) qui commande les paramètres de découpe pour la mise en œuvre d'un procédé selon la revendication 1.
